# EUROPÄISCHE PATENTSCHRIFT

(11) **EP 1 094 208 B1**
(45) Veröffentlichungstag und Bekanntmachung des Hinweises auf die Patenterteilung: **02.01.2002**
(21) Anmeldenummer: 99118851.7
(22) Anmeldetag: 24.09.1999
(51) Int. Cl.: F02B 23/10, F02F 1/42, F02F 1/24

(54) **Verbrennungskraftmaschine mit Direkteinspritzung und Verfahren zu deren Betrieb**
Direct injected engine and method of operation
Moteur à injection directe et procédé d'opération

(43) Veröffentlichungstag der Anmeldung: 25.04.2001
(73) Patentinhaber: Ford Global Technologies, Inc., A subsidiary of Ford Motor Company, Dearborn, Michigan 48126 (US)
(72) Erfinder: Phlips, Patrick, 50858 Koeln (DE)
(74) Vertreter: Messulam, Alec Moses

(56) Entgegenhaltungen:
- DE-A- 2 944 339
- DE-A- 19 726 683
- DE-A- 19 730 660
- US-A- 5 720 253

## Beschreibung

Die Erfindung betrifft eine Verbrennungskraftmaschine mit Benzindirekteinspritzung. Die Erfindung betrifft weiterhin ein Verfahren zum Betrieb dieser Verbrennungskraftmaschine.

Hintergrund der Erfindung ist das Erfordernis nach weiterer Absenkung der Emissionen von Kraftfahrzeugen. Für die Verringerung von Emissionen kommt es nicht nur darauf an, die Verbrennungskraftmaschine selbst in ihrer Konstruktion, sondern auch ihre Betriebsweise in Verbindung mit den Komponenten des Abgassystemes, insbesondere des Katalysators zu verbessern. Da bisher bekannte Katalysatoren ihre Wirkung nur in bestimmten Temperaturbereichen in ausreichender Weise entfalten, muss - wenn aufwendigere Massnahmen zur separaten Temperaturregelung des Katalysators vermieden werden sollen - die Konstruktion der Verbrennungskraftmaschine und deren Betriebsweise auf die Bedingungen des Katalysators und/oder der NOx-Falle Rücksicht nehmen. Zur Verringerung der Emissionen ist grundsätzlich ein stöchiometrisches Luft-Kraftstoffverhältnis (Lambda = 1) anzustreben. Um dennoch das volle Leistungspotential der Verbrennungskraftmaschine ausnutzen zu können, ist eine Minimierung der Klopfneigung durch den Einsatz einer effektiven Klopfregelung und eine Maximierung des volumetrischen Wirkungsgrades erforderlich.

Aus EP-A1-0916824 ist eine Verbrennungskraftmaschine mit Direkteinspritzung, einer Verbrennungskammer zwischen der Unterseite des Zylinderkopfes, der Oberseite des Kolbens im übrigen umgeben von der Zylinderlauffläche, sowie mit zwei Lufteinlasskanälen mit Ventilen und einem Luftauslasskanal mit Ventil schliesslich mit zwei Zündkerzen bekannt. Gegenüber der Kolbenachse bzw. Zylinderachse ist der Injektor geneigt. Der Lufteinlasskanal verläuft jedoch im Wesentlichen parallel zur Kolbenachse.

Die Verwendung von zwei Zündkerzen in Verbindung mit einer direkten Kraftstoffeinspritzung ist auch aus DE 2944339 und DE 3019330 bekannt. Die Verwendung von zwei Zündkerzen und das gerichtete Einspritzen von Kraftstoff, insbesondere in Verbindung mit einer Mulde in der Oberfläche des Kolbens sollte zu einer besseren Verbrennung des Kraftstoffes führen.

Hier setzt auch die Erfindung an, indem die Lufteinlasskanäle und der Injektor relativ zur Kolbenachse eine bestimmte Neigung aufweisen. In einer Referenzebene, die durch die Kolbenachse und die Injektordüse geht, weist der Injektor einen Winkel zur Kolbenachse Theta 1 auf. In Projektion auf diese Referenzebene ist wenigstens einer der Lufteinlasskanäle so angeordnet und gestaltet, dass ein etwa linearer Abschnitt im Bereich der Zylinderkopfaussenfläche vorgesehen ist und die Mittellinie dieses linearen Abschnittes zur Kolbenachse einen Winkel Theta 2 bildet. Ferner soll erfindungsgemäss gelten, dass der Winkel Theta 2 grösser als der Winkel Theta 1 ist. Diese Winkel sind insbesondere so gewählt, dass der 90° Winkel zwischen Kolbenachse und der unteren Zylinderkopfoberfläche etwa gedrittelt wird.

Bevorzugt ist die Neigung Theta 3 der Ventilachse zur Kolbenachse kleiner als Theta 1.

Dadurch, dass die Injektorneigung gegenüber der Neigung des Einlasskanals und der Ventilachse einen mittleren Wert aufweist, wird schon beim Einspritzen des Kraftstoffes eine verbesserte Durchmischung mit der angesaugten Luft erreicht. Ausserdem wird durch die Neigung der Ventilachse und einen spitzen Öffnungswinkel des Strahles zwischen 40° und 80°, bevorzugt von 60°, verhindert, dass die Ventile angesprüht werden. Schliesslich wird der Kraftstoffstrahl im Wesentlichen in die Mitte des Zylinders gelenkt und bereits im Ansaugtakt injiziert.

Bevorzugt sind beide Lufteinlasskanäle als Füllungskanäle (ohne Drallerzeugungsmittel) ausgeführt. Hierdurch wird eine erhebliche Verbesserung des volummetischen Wirkungsgrades erreicht. Dies gilt besonders bei niedrigen Drehzahlen, bei denen das maximale Drehmoment noch nicht erreicht ist. Ausserdem wird auch das Drehmoment in diesem Drehzahlbereich erheblich gesteigert.

Insbesondere gilt dies wenn einer der Lufteinlasskanäle mit einer Absperreinrichtung versehen ist. Bevorzugt sind die Zündkerzen symmetrisch zur Referenzebene angeordnet, sodass in Verbindung mit einer ebenfalls symmetrischen Anordnung der eine erhöhte Zuverlässigkeit der Gemischzündung erreicht wird.

Weiter ist es vorteilhaft, die Zündkerzen weder zu weit zur Mitte hin, noch zu weit zum Rand hin, anzuordnen. Bevorzugt ist ein Abstand (X) der Zündkerzen für den das Verhältnis (X/B) zum Kolbendurchmesser (B) in einem Wertebereich zwischen 0,2 und 0,8 liegt.

In der oberen Begrenzungsfläche des Brennraumes sind die Mittelpunkte der Zündkerzen (etwa die Mittenkontakte) äquidistant zu den Mittelpunkten der benachbarten Einlass/Auslassventilsitze angeordnet. Dadurch kann sich bezogen auf die Ebene (Kurbelachsenebene), die senkrecht zur Referenzebene liegt und durch die Kolbenachse geht, eine leicht exzentrische Anordnung der Zündkerzen ergeben.

Der Abstand (Y) zur Kurbelachsenebene ist bevorzugt so gewählt, dass Y/B im Wertbereich zwischen 0,05 und 0,3 liegt. Dies wirkt sich günstig auf die Bremsgeschwindigkeit des Gemisches aus.

In der Projektion auf die die Kopfunterseite gehende Ebene, ist der Auslasskanal gegenüber der Referenzebene geneigt, wobei in der Draufsicht bei gekrümmtem Auslasskanal, insbesondere die Verbindungslinie zwischen Ventilsitzmittelpunkt, bzw. dessen Projektion und dem Mittelpunkt der Anschlussöffnung des Auslasskanals an der Zylinderkopfaussenseite bzw. von dessen Projektion gegenüber der Referenzebene geneigt ist.

In der Projektion auf die Ebene durch die Zylinderkopfunterseite sind die Einlasskanäle gegenüber der Referenzebene ebenfalls geneigt. Bei gekrümmten Einlasskanälen bezieht sich diese Angabe auf die Verbindungslinie zwischen den Mittelpunkten der Ventilsitze und den Mittelpunkten der Einlasskanalöffnungen an der Zylinderkopfaussenseite. Die erfindungsgemässe Konstruktion führt dazu, dass eine insgesamt schnellere Verbrennung erreicht wird. Dies führt dazu, dass Schwankungen in der Brenngeschwindigkeit vermindert werden. Die beschriebene Verbrennungskraftmaschine kann aufgrund der erreichten erhöhten Verbrennungsgeschwindigkeit über einen erweiterten Drehzahlbereich hinsichtlich der Masszahl von 50 % Umsatzrate des gezündeten Gemisches in oder sehr nahe an dem optimalen Zeitpunkt von 8° nach OT gefahren werden. Dadurch ergibt sich ein insgesamt verbesserter Wirkungsgrad.

Die beiden Einlasskanäle sind bevorzugt symmetrisch zur Referenzebene ausgebildet und verlaufen in der Projektion möglichst gradlinig.

Das erfindungsgemässe Verfahren zum Betrieb der zuvor geschilderten Verbrennungskraftmaschine sieht vor, dass bei kaltem Motor im Leerlaufbetrieb ein im Wesentlichen konstantes Luftkraftstoffverhältnis eingestellt bleibt und der Zündzeitpunkt auf einen Zeitpunkt nach OT verstellt wird. Hierdurch wird der Wärmestrom des Abgases erhöht und der Katalysator nach dem Start des kalten Motors möglichst schnell auf Betriebstemperatur aufgeheizt. Hierbei wird bewusst in Kauf genommen, dass der Motor für eine kurze Zeit nicht verbrauchsoptimiert betrieben wird.

Dieser Nachteil ist jedoch gering, im Verhältnis zu dem Effekt des schnelleren Aufheizens des Katalysators, der durch den wesentlich erhöhten Wärmestrom erzielt wird.

Bevorzugt wird der Zündzeitpunkt auf einen Zeitpunkt verstellt, der bezogen auf die Drehung der Kurbelwelle zwischen 0 und 25° nach OT liegt. Diese extreme Spätzündung ist nur aufgrund der vorbeschriebenen Konstruktion der Verbrennungskraftmaschine zu erreichen.

Mit der Verminderung der Schwankungen stellt sich eine wesentlich verbesserte Laufruhe ein. Durch die aufgrund der konstruktiven Massnahmen erreichte Verbesserung der Laufruhe ist es möglich, den Zündzeitpunkt von, bei anderen Motoren typischerweise 10 ° vor OT, auf Zeitpunkte nach OT zu verstellen. Je nach Mass der gewünschten Laufruhe sind dabei Zündzeitpunkte bis zu 30 ° nach OT möglich. Ein bevorzugter Wert für den Zündzeitpunkt bei einer Verbrennungskraftmaschine mit 4 Zylindern in Reihenanordnung, liegt zwischen 10 und 20° nach OT.

Insbesondere in Verbindung mit einer elektronisch geregelten Drosselklappe kann bei kaltem Motor und bei höheren Drehmomentanforderungen ein konstantes Luftkraftstoffverhältnis eingestellt werden, wobei unter diesen Bedingungen der Zündzeitpunkt zwar auf einen Zeitpunkt vor OT verlegt werden muss, dabei bleibt jedoch der konstruktionsbedingte Vorteil der schnelleren Verbrennung und damit der verringerten Schwankung der Brenngeschwindigkeit erhalten und die Zündung erfolgt immer noch später als bei einer Verbrennungskraftmachine mit 4-Ventilanordnung.

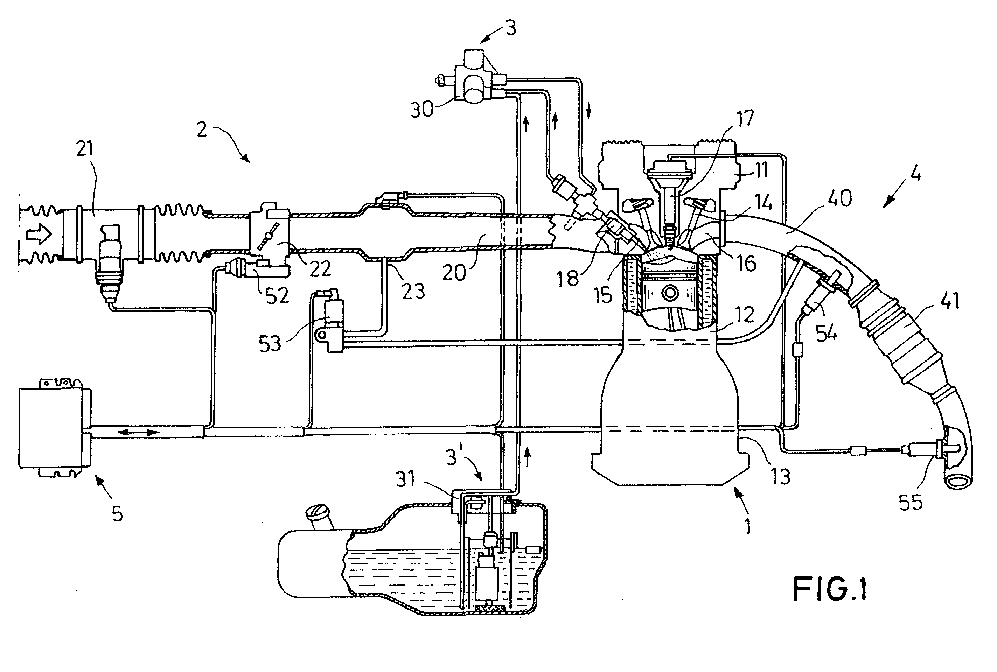

Anhand der in den Figuren 1-5 dargestellten Ausführung wird die Erfindung näher erläutert.

Figur 1 zeigt eine Verbrennungskraftmaschine 1 mit Luftzuführungssystem 2, Kraftstoffzuführungssystem 3, 3' Abgassystem 4, Elektronische Steuereinheit 5. Die Verbrennungskraftmaschine einen Zylinderkopf 11, Block 12, Kurbelwellengehäuse 13 auf. Im Zylinderkopf sind Ventile 14, Luftzuführungskanäle 15, Luftauslasskanäle 16, Zündkerzen 17 und Injektor 18 angeordnet.

Das Luftzuführungssystem ist mit seiner Leitung 20, mit den Luftzuführungskanälen 15 verbunden. In der Leitung 20 befindet sich ein Luftmengensensor 21 eine elektronisch gesteuerte Drosselklappe 22 sowie ein Anschluss für die Rückführung von Abgas 23.

Das Kraftstoffzuführungssytem 3 ist mit dem Injektor 18 verbunden. Es weist eine Hochdruckpumpe 30 und eine am Kraftstoffzuführungssystem 3' in der Nähe des Kraftstofftanks angeordnete Niederdruckpumpe 31 auf.

Das Abgassystem 4 ist mit der Leitung 40, mit dem Auslasskanal 16 verbunden. In dieser Leitung ist ausserdem der Katalysator 41 angeordnet.

Die Motorsteuerung 5 ist mit dem Sensor 21 für die Luftmassenstrommessung, der Einstelleinrichtung 52 für die elektronische Drosselklappe, der Steuereinrichtung 53 für die Steuerung/Regelung der Abgasrückführungsmenge, den Pumpen 31 und 30, den Zündkerzen 17 sowie Sauerstoffsensoren 54 und 55 verbunden.

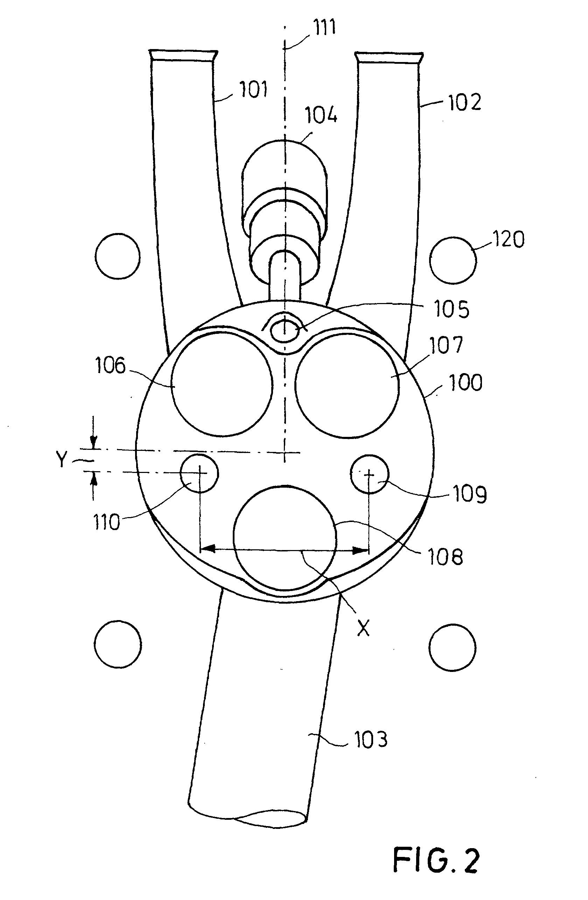

Figur 2 zeigt schematisch für einen Zylinder die Ansicht auf die Zylinderkopfunterseite an den kreisförmigen Brennraum 100 sind Einlasskanäle 101 und 102, sowie ein Auslasskanal 103 angeschlossen. Zwischen den Einlasskanälen ist der Injektor 104 angeordnet, der in einem Durchlass 105 in den Brennraum mündet. Die Einlasskanäle münden in Ventilsitzringe 106 und 107. Der Auslasskanal mündet in den Ventilsitzring 108. Zwischen den Ventilsitzringen von Einlass- und Auslasskanal sind die Zündkerzen 109 und 110 angeordnet. Mit Bezug auf die Referenzebene 111, die durch die Kolbenmittelachse und die Mitte der Injektoröffnung 105 geht, sind die Einlasskanäle im Wesentlichen symmetrisch ausgebildet. Der Auslasskanal 103 kann in einem Winkel zur Referenzebene verlaufen. Das Verhältnis zwischen Abstand X der Zündkerzen und dem Durchmesser B des Brennraumes (der Bohrung) 100 beträgt hier 0,59. Die Zündkerzen 110 und 109 sind um das Mass Y exzentrisch zur Kurbelwellenachsenebene angeordnet. Das Verhältnis Y/B beträgt hier 0,07. Mit Befestigunsdurchgängen 120 ist der Zylinderkopf mit dem Block verbunden.

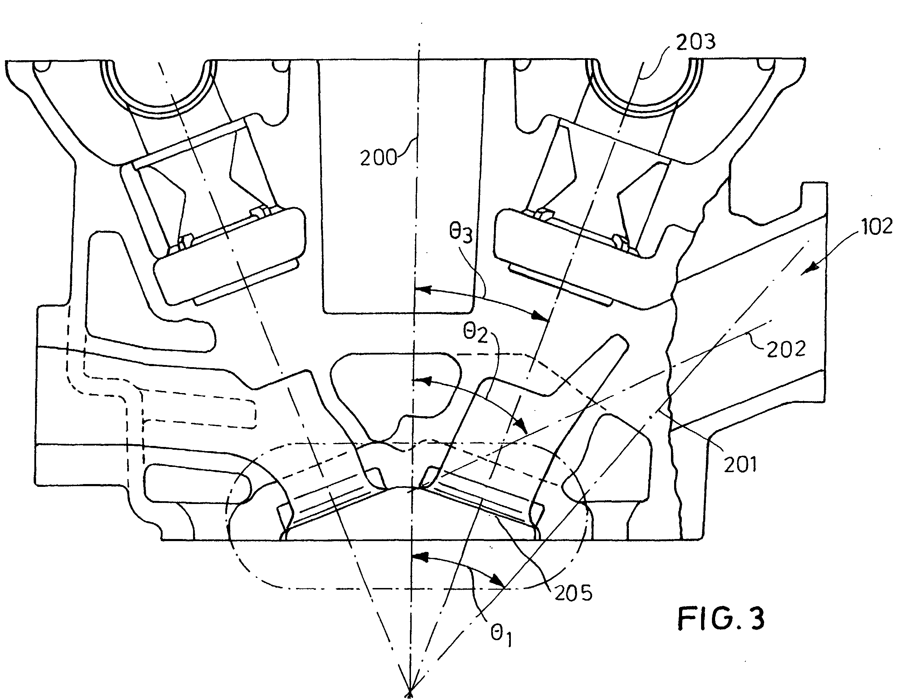

Fig. 3 zeigt in etwa die Projektion auf die Referenzebene 111. Wie in Fig. 3 dargestellt ist die Injektorachse 201 gegenüber der Kolbenachse 200 um den Winkel Theta 1 geneigt. Dieser Winkel beträgt hier 40°. Die Mittellinie 202 eines linearen Abschnittes des Einlasskanals 102 ist um den Winkel Theta 2 gegenüber der Kolbenachse 200 geneigt. Dieser Winkel beträgt hier 60°. Der lineare Abschnitt des Einlasskanals liegt stromaufwärts vom Einlassventilsitz 205. Die Ventilachse 203 ist um einen Winkel Theta 3 gegen die Kolbenachse 200 geneigt. Dieser Winkel beträgt hier 20°. Die Kolbenoberfläche ist im Wesentlichen eben oder allenfalls der Dachfläche des Brennraumes im Zylinderkopf angepasst.

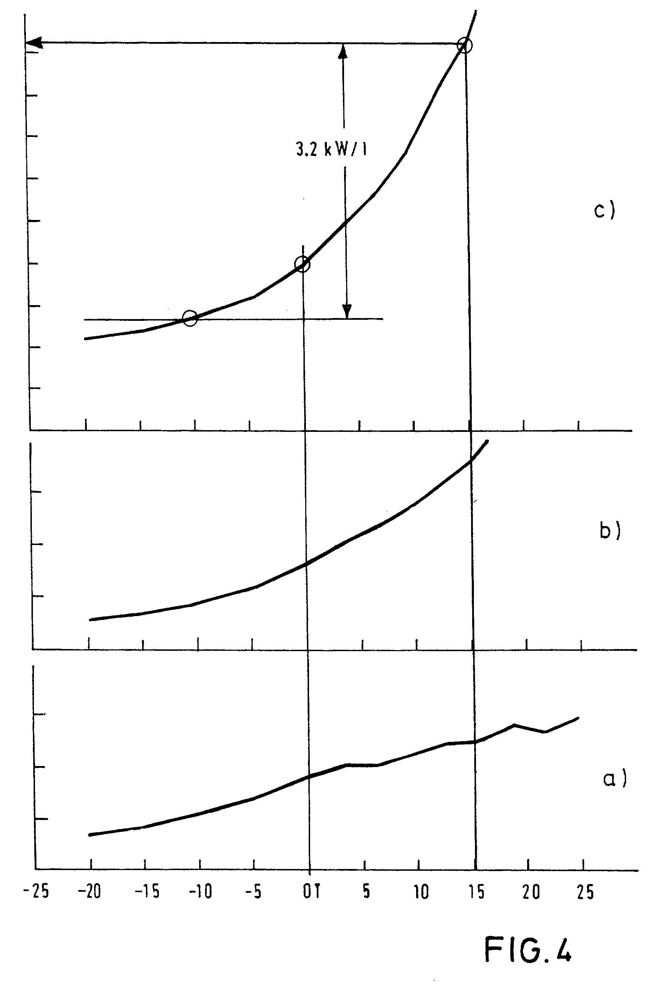

In Figur 4 ist der Vorteil des erfindungsgemässen Verfahrens veranschaulicht. Das Teilbild a) zeigt, dass die Druckschwankungen bis zu 25° nach OT unter einem als Komfortgrenze betrachteten Wert bleiben. In Teilbild b) ist die mit zunehmender Verzögerung des Zündzeitpunktes ansteigende Temperatur des Abgases dargestellt. Wie in Teilbild c) dargestellt kann durch die verspätete Zündung bei 15 ° nach OT eine Leistung von 3,2 KW pro Liter über der für den Leerlaufbetrieb notwendigen Leistung an den Katalysator abgegeben werden.

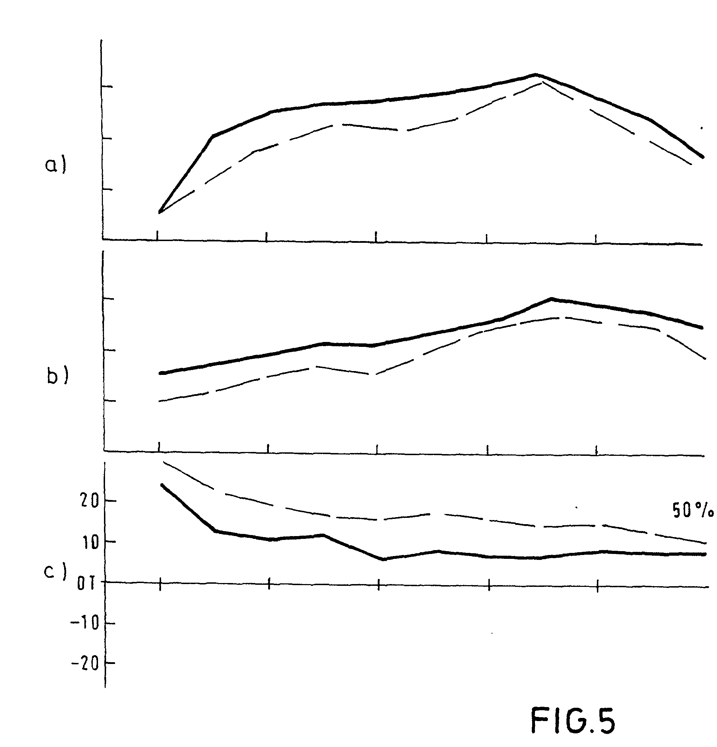

In Figur 5 ist ein Vergleich zwischen einem 4-Ventilmotor (gestrichelte Linie) und dem erfindungsgemäss konstruierten Motor (durchgezogene Linie) dargestellt. Auf der Abszisse ist die Drehzahl aufgetragen. Das Teilbild a) zeigt den Drehmomentverlauf. Insbesondere bei niedrigen Drehzahlen weist die erfindungsgemässe Verbrennungskraftmaschien erheblich bessere Drehmomentwerte auf. Im Teilbild b) ist der volumentrische Wirkungsgrad dargestellt. Insbesondere durch die Anordnung der Füllungskanäle und die erfindungsgemäss eingestellten Neigungen von Einlasskanälen und Injektor wird eine deutliche Verbesserung des volumentrischen Wirkungsgrades erreicht. In Teilbild c) ist für die beiden Vergleichsmotoren der Wert für 50 % Umsetzung des gezündeten Gemisches dargestellt. Die erfindungsgemässe Verbrennungskraftmaschine kann deutlich näher als der Vergleichsmotor an dem optimalen Wert bei etwa 8 Grad nach OT betrieben werden.

## Patentansprüche

1. Verbrennungskraftmaschine mit Direkteinspritzung, mit einer Verbrennungskammer, die zwischen der Unterseite des Zylinderkopfes, der Oberseite des Kolbens und im Übrigen von der Zylinderlauffläche gebildet wird, mit zwei Lufteinlasskanälen mit Ventilen, mit einem Luftauslasskanal mit einem Ventil sowie mit zwei Zündkerzen, **dadurch gekennzeichnet, dass** ein etwa linearer, stromaufwärts gelegener Abschnitt der Lufteinlasskanäle eine Neigung Tetha 2 gegenüber der Kolbenachse aufweisen, die grösser ist als die Neigung Tetha 1 des Injektors zur Kolbenachse.

2. Verbrennungskraftmaschine nach Anspruch 1 **dadurch gekennzeichnet, dass** die Ventilachse gegenüber der Kolbenachse eine Neigung Theta 3 aufweist, die kleiner als Theta 1 ist.

3. Verbrennungskraftmaschine nach Anspruch 1 oder 2, **dadurch gekennzeichnet, dass** die beiden Lufteinlasskanäle als Füllungskanäle ausgebildet sind und einer mit einer Absperreinrichtung versehen ist.

4. Verbrennungskraftmaschine nach einem der Ansprüche 1 bis 3, **dadurch gekennzeichnet, dass** das Verhältnis des Abstandes (X) der Zündkerzen zum Bohrungsdurchmesser (B) zwischen 0,2 und 0,8 liegt.

5. Verbrennungskraftmaschine nach einem der Einsprüche 1-4, **dadurch gekennzeichnet, dass** die Zündkerzen etwa äquidistant zu dem benachbarten Einlass/Auslassventilsitz angeordnet sind.

6. Verbrennungskraftmaschine nach einem der Ansprüche 1-5, **dadurch gekennzeichnet ,dass** die Einlasskanäle in der Draufsicht symmetrisch zur Referenzebene ausgebildet sind und etwa parallel zu dieser verlaufen.

7. Verfahren zum Betrieb einer Verbrennungskraftmaschine mit Direkteinspritzung, eine Verbrennungskammer zwischen der Unterseite des Zylinderkopfes und der Oberseite des Kolbens, mit 2 mit Ventilen versehenen Lufteinlasskanälen und einem mit einem Ventil versehenen Luftauslasskanal sowie mit 2 Zündkerzen, wobei ein etwa linearer, stromaufwärts gelegener Abschnitt der Lufteinlasskanäle eine Neigung Tetha 2 gegenüber der Kolbenachse aufweisen die grösser ist als die Neigung Tetha 1 des Injektors zur Kolbenachse, wobei bei kaltem Motor im Leerlaufbetrieb ein im Wesentlichen konstantes Luftkraftstoffverhältnis eingestellt bleibt und der Zündzeitpunkt auf einen Zeitpunkt nach OT eingestellt ist.

8. Verfahren nach Anspruch 7 **dadurch gekennzeichnet dass**, der Zündzeitpunkt zwischen 0 und 25 ° nach OT liegt.

9. Verfahren nach Anspruch 7 **dadurch gekennzeichnet, dass** der Zündzeitpunkt zwischen 10 und 20° nach OT liegt.

## Claims

1. Direct injected engine with a combustion chamber, which is formed between the lower side of the cylinder head, the upper side of the piston and incidentally formed by the cylinder running face, with two air inlet channels with valves, with an air outlet channel with a valve as well as with two spark plugs, **characterised it that** an approximately linear, upstream lying section of the air inlet channels have an inclination Tetha 2 in relation to the piston axis, which is larger than the inclination Tetha 1 of the injector to the piston axis.

2. Direct injected engine according to Figure 1 **characterised in that** the valve axis in relation to the piston axis has an inclination Theta 3, which is smaller than Theta 1.

3. Direct injected engine according to Claim 1 or 2 **characterised in that** the two air inlet channels are formed as filling channels and one is provided with a shut-off device.

4. Direct injected engine according to one of the Claims 1 to 3 **characterised in that** the relationship of the distance (X) of the spark plugs to the hole diameter (B) lies between 0.2 and 0.8.

5. Direct injected engine according to one of the Claims 1 to 4 **characterised in that** the spark plugs are arranged approximately equidistant to the adjacent inlet/outlet valve seat.

6. Direct injected engine according to one of the Claims 1 to 5 **characterised in that** the inlet channels in the top view are formed symmetrically to the reference plane and run approximately parallel to this.

7. Method of operating a direct injected engine, a combustion chamber between the lower side of the cylinder head and the upper side of the piston, with 2 air inlet channels provided with valves and an air outlet channel provided with a valve as well as with 2 spark plugs, wherein an approximately linear, upstream lying section of the air inlet channels have an inclination Tetha 2 in relation to the piston axis, which is larger than the inclination Tetha 1 of the injector to the piston axis, wherein when the cold engine is in idling operation an essentially constant air fuel ratio remains set and the ignition point is set to a point in time after OT.

8. Method according to Claim 7 **characterised in that** the ignition point lies between 0 and 25º after OT.

9. Method according to Claim 7 **characterised in that** the ignition point lies between 10 and 20º after OT.

## Revendications

1. Moteur à combustion interne à injection directe, comportant une chambre de combustion formée entre la face inférieure de la culasse cylindrique et la face supérieure du piston et, en outre, par la surface de glissement du cylindre ; deux canaux d'admission d'air munis de soupapes ; un canal de sortie d'air muni d'une soupape ; ainsi que deux bougies d'allumage, **caractérisé par le fait qu'**un segment sensiblement rectiligne des canaux d'admission d'air, situé en amont, présente, vis-à-vis de l'axe du piston, une inclinaison thêta 2 plus grande que l'inclinaison thêta 1 de l'injecteur vis-à-vis dudit axe du piston.

2. Moteur à combustion interne selon la revendication 1, **caractérisé par le fait que** l'axe de la soupape présente, vis-à-vis de l'axe du piston, une inclinaison thêta 3 plus petite que thêta 1.

3. Moteur à combustion interne selon la revendication 1 ou 2, **caractérisé par le fait que** les deux canaux d'admission d'air sont réalisés sous la forme de canaux de remplissage et sont pourvus d'un système d'isolement.

4. Moteur à combustion interne selon l'une des revendications 1 à 3, **caractérisé par le fait que** le rapport, entre la distance (X) des bougies d'allumage et le diamètre (B) de l'alésage, est compris entre 0,2 et 0,8.

5. Moteur à combustion interne selon l'une des revendications 1-4, **caractérisé par le fait que** les bougies d'allumage sont sensiblement équidistantes du siège d'obturation à l'admission/à la sortie, occupant une position voisine.

6. Moteur à combustion interne selon l'une des revendications 1-5, **caractérisé par le fait que** les canaux d'admission sont réalisés, observés par-dessus, symétriques vis-à-vis du plan de référence, et s'étendent à peu près parallèlement à ce dernier.

7. Procédé d'opération d'un moteur à combustion interne à injection directe comportant une chambre de combustion entre la face inférieure de la culasse cylindrique et la face supérieure du piston ; deux canaux d'admission d'air munis de soupapes ; un canal de sortie d'air muni d'une soupape ; ainsi que deux bougies d'allumage, un segment sensiblement rectiligne desdits canaux d'admission d'air, situé en amont, présentant, vis-à-vis de l'axe du piston, une inclinaison thêta 2 plus grande que l'inclinaison thêta 1 de l'injecteur vis-à-vis dudit axe du piston, sachant que, à l'état froid du moteur et lors du fonctionnement en mode ralenti, un rapport air/carburant pour l'essentiel constant demeure ajusté, et que l'instant de l'allumage est réglé sur un instant succédant au point mort haut.

8. Procédé selon la revendication 7, **caractérisé par le fait que** l'instant de l'allumage se situe entre 0 et 25° après le point mort haut.

9. Procédé selon la revendication 7, **caractérisé par le fait que** l'instant de l'allumage se situe entre 10 et 20° après le point mort haut.
